(19) Europäisches Patentamt
European Patent Office
Office européen des brevets

(11) EP 4 435 903 A1

(12) EUROPEAN PATENT APPLICATION
published in accordance with Art. 153(4) EPC

(43) Date of publication:
**25.09.2024 Bulletin 2024/39**

(21) Application number: **23802700.7**

(22) Date of filing: **28.04.2023**

(51) International Patent Classification (IPC):
***H01M 6/16*** (2006.01) ***H01M 10/0567*** (2010.01)
***H01M 10/0568*** (2010.01)

(52) Cooperative Patent Classification (CPC):
**H01M 4/36; H01M 4/525; H01M 6/16;
H01M 10/0525; H01M 10/0567; H01M 10/0568;
H01M 10/42**

(86) International application number:
**PCT/CN2023/091652**

(87) International publication number:
**WO 2023/216928 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.05.2022 CN 202210519593**

(71) Applicant: **Zhuhai CosMX Battery Co., Ltd.
Zhuhai, Guangdong 519180 (CN)**

(72) Inventors:
- **MU, Yingdi
Zhuhai, Guangdong 519180 (CN)**
- **WANG, Hai
Zhuhai, Guangdong 519180 (CN)**
- **LI, Suli
Zhuhai, Guangdong 519180 (CN)**

(74) Representative: **Murgitroyd & Company
165-169 Scotland Street
Glasgow G5 8PL (GB)**

# (54) BATTERY

(57) Invention is a battery. The battery includes a positive electrode plate, a negative electrode plate, a separator, and an electrolyte solution, where the positive electrode plate includes a positive electrode active material; the negative electrode plate includes a negative electrode active material; the electrolyte solution includes an organic solvent, an additive and an electrolyte salt; the electrolyte salt includes at least one compound represented by Formula 1 and/or at least one compound represented by Formula 2; and the battery satisfies the following requirement: a ratio of (A + B) to C ranges from 10 to 1000.

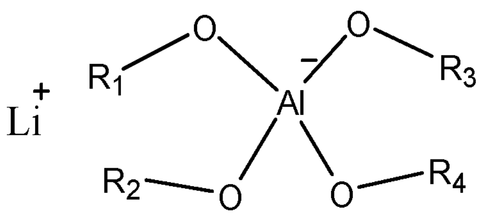

Formula 1,

and

EP 4 435 903 A1

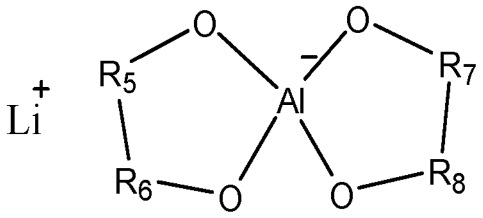 Formula 2.

## Description

### TECHNICAL FIELD

The present invention pertains to the field of lithium-ion battery technologies, relates to a battery, and specifically relates to a high-voltage lithium-ion battery having excellent high and low temperature performance.

### BACKGROUND

In recent years, lithium-ion batteries have been widely used in a smartphone, a tablet computer, an intelligent wearing, an electric tool, an electric vehicle, and other fields. With increasing application of lithium-ion batteries, use environment and requirements of consumers for lithium-ion batteries are constantly improving. This requires that lithium-ion batteries have high safety while taking high and low temperature performance into account.
Currently, there is a potential safety hazard in a use process of lithium-ion batteries. For example, when a battery is in some extreme use cases such as a continuous high temperature, a serious safety accident such as a fire or even an explosion may occur. A main reason for the above problem is that a structure of a positive electrode material is unstable at high temperature and high voltage, metal ions are easily dissolved from the positive electrode and reduced and deposited on a surface of a negative electrode, thereby destroying an SEI film structure on the surface of the negative electrode, and resulting in an increasing negative electrode impedance and an increasing battery thickness. This makes a temperature of a cell continuously increase, and causes a safety accident when heat is continuously accumulated and cannot be released.
To resolve the above technical problem, currently, a flame retardant (such as trimethyl phosphate) is added to an electrolyte solution to improve high-temperature performance and safety performance of a battery. However, use of the above flame retardant often causes serious performance degradation of the battery.
Therefore, it is very important to develop a battery having both good high and low temperature performance and high safety performance.

### SUMMARY

To overcome defects in the conventional technology, the present invention aims to provide a battery. In the battery, an electrolyte solution cooperates with a positive electrode plate and a negative electrode plate to improve the high-temperature storage performance, low-temperature discharge performance, and safety performance of the battery, so that the battery is enabled to have both good high and low temperature performance and high safety performance.
To achieve the foregoing objective, the following technical solution is used in the present invention.
A battery is provided. The battery includes a positive electrode plate, a negative electrode plate, a separator, and an electrolyte solution, where the positive electrode plate includes a positive electrode active material; the negative electrode plate includes a negative electrode active material; the electrolyte solution includes an organic solvent, an additive and an electrolyte salt; and the electrolyte salt includes at least one compound represented by Formula 1 and/or at least one compound represented by Formula 2:

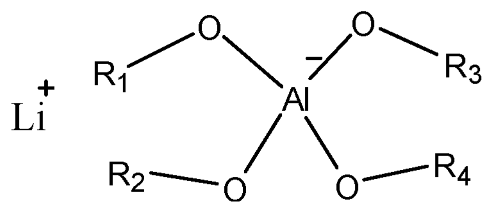

Formula 1,

and

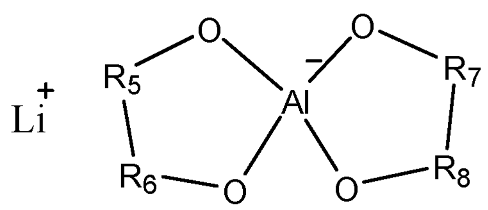

Formula 2,

where in Formula 1, $R_1$, $R_2$, $R_3$, and $R_4$ are the same as or different from each other, and are each independently selected from substituted or unsubstituted alkyl; and the substituent is halogen, or halogen-substituted or unsubstituted alkyl;

in Formula 2, $R_5$, $R_6$, $R_7$, and $R_8$ are the same as or different from each other, and are each independently selected from -C(=O)-, or substituted or unsubstituted alkylene; and the substituent is halogen, or halogen-substituted or unsubstituted alkyl; and

the battery satisfies the following requirement: a ratio of (A + B) to C ranges from 10 to 1000,

where A denotes a specific surface area (unit: $m^2/g$) of the positive electrode active material; B denotes a specific surface area (unit: $m^2/g$) of the negative electrode active material; and C denotes a percentage of a mass of the compound represented by Formula 1 and/or the compound represented by Formula 2 in a total mass of the electrolyte solution.

In an example, the compound represented by Formula 1 and the compound represented by Formula 2 are aluminum salt compounds.

In the present invention, the electrolyte solution of the battery contains the aluminum salt compound. The aluminum salt compound can sufficiently form a passivation coating protective layer that is rich in $Al_2O_3$ and $AlF_3$ on a surface of a positive electrode, which can effectively protect the positive electrode active material, thereby inhibiting metal ions from dissolving out to catalyze side reaction decomposition of the electrolyte solution, and effectively improving the high-temperature storage performance and safety performance of the battery. In addition, the aluminum salt compound can also sufficiently reduce the surface tension of the electrolyte solution and inhibit the growth of lithium dendrites, thereby reducing a contact angle between the electrolyte solution and the negative electrode plate, and improving the infiltration of the electrolyte solution, the transmission rate of ions, and the low-temperature discharge performance of the battery. The aluminum salt compound can improve the interfacial compatibility of the battery, thereby effectively inhibiting a side reaction between an electrode and an electrolyte solution. This comprehensively improves the cell performance of the battery, thereby obtaining a battery that has not only high safety performance but also good high-temperature storage performance, high-temperature cycling performance and low-temperature discharge performance.

The battery may satisfy: a ratio of (A+B) to C ranges from 10 to 1000. For example, the ratio is 10, 50, 100, 150, 200, 250, 300, 400, 450, 500, 550, 600, 700, 800, 900, 1000, or a point value in a range formed by any two of the foregoing values. When the ratio of (A+B) to C ranges from 10 to 1000, the compound represented by Formula 1 and/or the compound represented by Formula 2 (namely, the aluminum salt compound) can more sufficiently form a passivation coating protective layer that is rich in $Al_2O_3$ and $AlF_3$ on a surface of a positive electrode, which effectively protects the positive electrode active material, thereby inhibiting metal ions from dissolving out to catalyze side reaction decomposition of the electrolyte solution, and effectively improving the high-temperature storage performance and safety performance of the battery. Further, the compound represented by Formula 1 and/or the compound represented by Formula 2 can more sufficiently reduce the surface tension of the electrolyte solution and inhibit the growth of lithium dendrites, thereby reducing a contact angle between the electrolyte solution and the negative electrode plate, and improving the infiltration of the electrolyte solution, the transmission rate of ions, and the low-temperature discharge performance of the battery. When the ratio of (A+B) to C ranges from 10 to 1000, the compound represented by Formula 1 and/or the compound represented by Formula 2 can more sufficiently cooperate with the positive and negative electrode active materials to play a synergistic effect, thereby improving the interfacial compatibility of the battery, and effectively inhibiting a side reaction between an electrode and an electrolyte solution. This comprehensively improves the cell performance of the battery. Therefore, the battery has both good high and low temperature performance and high safety performance.

The percentage of the mass of the compound represented by Formula 1 and/or the compound represented by Formula 2 in the total mass of the electrolyte solution indicates that when the electrolyte solution includes only the compound represented by Formula 1 or the compound represented by Formula 2, C denotes a percentage of a mass of the compound represented by Formula 1 or the compound represented by Formula 2 in the total mass of the electrolyte solution, and that when the electrolyte solution includes both the compound represented by Formula 1 and the compound represented by Formula 2, C denotes a percentage of a total mass of the compound represented by Formula 1 and the compound represented by Formula 2 in the total mass of the electrolyte solution.

In an example, a specific surface area A of the positive electrode active material ranges from 0.05 $m^2/g$ to 1 $m^2/g$. For example, A is 0.05 $m^2/g$, 0.1 $m^2/g$, 0.2 $m^2/g$, 0.3 $m^2/g$, 0.4 $m^2/g$, 0.5 $m^2/g$, 0.6 $m^2/g$, 0.7 $m^2/g$, 0.8 $m^2/g$, 0.9 $m^2/g$, or 1 $m^2/g$. Preferably, A ranges from 0.1 $m^2/g$ to 0.4 $m^2/g$.

In an example, a specific surface area B of the negative electrode active material ranges from 0.5 $m^2/g$ to 5 $m^2/g$. For example, B is 0.5 $m^2/g$, 0.6 $m^2/g$, 0.7 $m^2/g$, 0.8 $m^2/g$, 0.9 $m^2/g$, 1 $m^2/g$, 1.5 $m^2/g$, 1.8 $m^2/g$, 2 $m^2/g$, 2.5 $m^2/g$, 3 $m^2/g$, 3.5 $m^2/g$, 4 $m^2/g$, 4.5 $m^2/g$, or 5 $m^2/g$. Preferably, B ranges from 0.9 $m^2/g$ to 2 $m^2/g$.

In an example, in Formula 1, $R_1$, $R_2$, $R_3$, and $R_4$ are the same as or different from each other, and are each

independently selected from substituted or unsubstituted $C_{1-6}$ alkyl; and the substituent is halogen, or halogen-substituted or unsubstituted $C_{1-6}$ alkyl.

In an example, in Formula 1, $R_1$, $R_2$, $R_3$, and $R_4$ are the same as or different from each other, and are each independently selected from substituted or unsubstituted $C_{1-3}$ alkyl; and the substituent is halogen, or halogen-substituted or unsubstituted $C_{1-3}$ alkyl.

In an example, in Formula 1, $R_1$, $R_2$, $R_3$, and $R_4$ are the same as or different from each other, and are each independently selected from substituted methyl, substituted ethyl, or substituted propyl; and the substituent is fluorine, fluorine-substituted or unsubstituted methyl, or fluorine-substituted or unsubstituted ethyl.

In an example, in Formula 2, $R_5$, $R_6$, $R_7$, and $R_8$ are the same as or different from each other, and are each independently selected from -C(=O)-, or substituted or unsubstituted $C_{1-6}$ alkylene; and the substituent is halogen, or halogen-substituted or unsubstituted $C_{1-6}$ alkyl.

In an example, in Formula 2, $R_5$, $R_6$, $R_7$, and $R_8$ are the same as or different from each other, and are each independently selected from -C(=O)-, or substituted or unsubstituted $C_{1-3}$ alkylene; and the substituent is halogen, or halogen-substituted or unsubstituted $C_{1-3}$ alkyl.

In an example, in Formula 2, $R_5$, $R_6$, $R_7$, and $R_8$ are the same as or different from each other, and are each independently selected from -C(=O)-, substituted or unsubstituted methylene, or substituted or unsubstituted ethylidene; and the substituent is fluorine, fluorine-substituted or unsubstituted methyl, or fluorine-substituted or unsubstituted ethyl.

In an example, the compound represented by Formula 1 is selected from a compound represented by the following Formula T1:

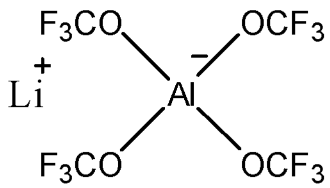

(T1).

In an example, the compound represented by Formula 2 is selected from at least one of compounds represented by the following formulas T2 to T4:

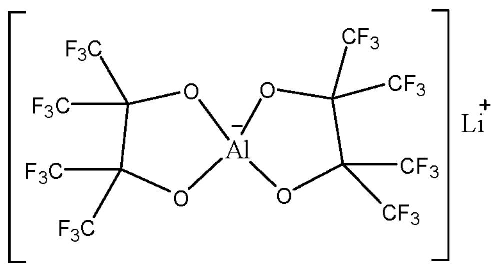

(T2);

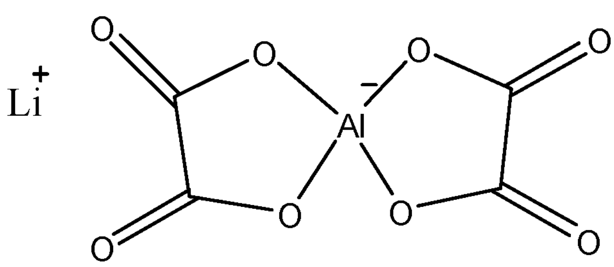

(T3);

and

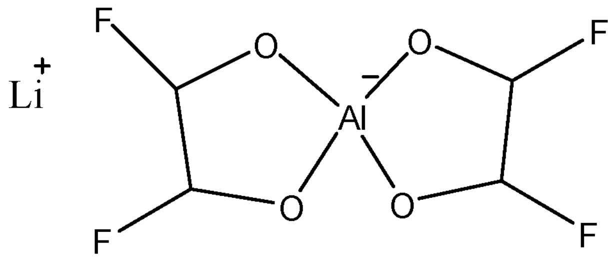

(T4).

In an example, a mass of the compound represented by Formula 1 and/or the compound represented by Formula 2 accounts for 0.1 wt% to 16 wt% of the total mass of the electrolyte solution. For example, the percentage is 0.2 wt%, 0.5 wt%, 0.8 wt%, 1 wt%, 1.5 wt%, 2 wt%, 2.5 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, or 16 wt%. Preferably 0.2 wt% to 12 wt%.

In an example, a mass of the electrolyte salt accounts for 10 wt% to 20 wt% of the total mass of the electrolyte solution.

In an example, the electrolyte salt further includes a lithium salt.

In an example, the lithium salt is selected from at least one of lithium bis(trifluoromethanesulphonyl)imide, lithium bis(fluorosulfonyl)imide, or lithium hexafluorophosphate.

In an example, the positive electrode plate includes a positive electrode current collector and a positive electrode active material layer coated on a surface of either or both sides of the positive electrode current collector. The positive electrode active material layer includes a positive electrode active material, a conductive agent, and a binder. The positive electrode active material is selected from lithium cobaltate oxide or lithium cobaltate oxide doped and coated with two or more elements in Al, Mg, Mn, Cr, Ti, or Zr. A chemical formula of the lithium cobaltate oxide doped and coated with two or more elements in Al, Mg, Mn, Cr, Ti, or Zr is $Li_xCo_{1-y1-y2-y3-y4}A_{y1}B_{y2}C_{y3}D_{y4}O_2$, where $0.95 \leq x \leq 1.05$, $0.01 \leq y1 \leq 0.1$, $0.01 \leq y2 \leq 0.1$, $0 \leq y3 \leq 0.1$, $0 \leq y4 \leq 0.1$, and A, B, C, and D are selected from two or more elements in Al, Mg, Mn, Cr, Ti, or Zr.

In an example, the negative electrode plate includes a negative electrode current collector and a negative electrode active material layer coated on a surface of either or both sides of the negative electrode current collector. The negative electrode active material layer includes the negative electrode active material, a conductive agent, and a binder. The negative electrode active material is selected from one or more of artificial graphite, natural graphite, hard carbon, mesocarbon microbead, lithium titanate, silicon carbon, or silicon monoxide.

In an example, the electrolyte solution further includes 1-ethyl-3-methylimidazolium heptachlorodialuminate (CAS No.: 87587-77-7). 1-ethyl-3-methylimidazolium heptachlorodialuminate in the electrolyte solution may form a strong SEI film on a surface of a negative electrode, which can effectively inhibit reduction and decomposition of the electrolyte solution on the surface of the negative electrode, reduce a side reaction on an interface of the negative electrode, and improve the cycling performance of a cell. The positive electrode and the negative electrode are cooperatively combined with the electrolyte solution, which helps the cell have all of high-temperature storage performance, cycling performance, low-temperature discharge performance, and safety performance.

In an example, a percentage of a mass of 1-ethyl-3-methylimidazolium heptachlorodialuminate in the total mass of the electrolyte solution ranges from 0.1 wt% to 2 wt%. For example, the percentage is 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2 wt%.

In an example, the electrolyte solution further includes one or more of a nitrile compound, a sulfur-containing compound, or a carbonate compound.

In an example, the additive includes one or more of a nitrile compound, a sulfur-containing compound, or a carbonate compound.

In an example, the nitrile compound is selected from one or more of succinonitrile, glutaronitrile, adiponitrile, pimelonitrile, suberonitrile, glycerol trinitrile, ethoxy(pentafluoro)phosphazene, or 1,3,6-hexanetrionitrile.

In an example, the sulfur-containing compound is selected from one or more of 1,3-propane sultone, 1-propene 1,3-sultone, ethylene sulfate, or vinylene sulfate.

In an example, the carbonate compound is one or both of ethylene carbonate or vinyl ethylene carbonate.

In an example, a percentage of a mass of the additive in the total mass of the electrolyte solution ranges from 6 wt% to 20 wt%. For example, the percentage is 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, or 20 wt%.

In an example, the organic solvent is selected from at least one of carbonate, carboxylic acid ester, or fluorinated ether. The carbonate is selected from one or more combinations of ethylene carbonate, propylene carbonate, fluoroethylene carbonate, dimethyl carbonate, ethyl methyl carbonate, diethyl carbonate, or methyl propyl carbonate. The carboxylic acid ester is selected from one or more combinations of ethyl propionate or propyl propionate. The fluorinated ether is selected from 1,1,2,3-tetrafluoroethyl-2,2,3,3-tetrafluoropropyl ether.

In an example, the separator is selected from polyethylene.

In an example, a charge cut-off voltage of the battery is 4.45 V or above.

Beneficial effects of the present invention are as follows:

The present invention provides a battery. Inventors of the present invention find that the low-temperature performance, high-temperature cycling performance, high-temperature storage performance, and safety performance of the battery can be effectively improved due to the synergistic effect of the positive and negative electrode active materials and aluminum salt compounds (namely, the compound represented by Formula 1 and/or the compound represented by Formula 2) in the electrolyte solution.

## DETAILED DESCRIPTION OF THE EMBODIMENTS

The present invention is further described in detail below with reference to specific examples. It should be understood that the following examples are merely for the purposes of illustrating and explaining the present invention, and should not be construed as limiting the scope of protection of the present invention. Any technology implemented based on the foregoing contents of the present invention falls within the intended scope of protection of the present invention.

Experimental methods used in the following examples are conventional methods, unless otherwise specified. Reagents, materials, and the like used in the following examples are all commercially available, unless otherwise specified.

Comparative examples 1 to 3 and Examples 1 to 11

Lithium-ion batteries in Comparative examples 1 to 3 and Examples 1 to 11 were prepared according to the following preparation method, and a difference lies only in that different positive and negative electrode active materials having different specific surface areas and different electrolyte solutions were selected. The difference is specifically shown in Table 1.

(1) Preparation of positive electrode plates

A positive electrode active material $LiCoO_2$ (having a specific surface area shown in Table 1), a binder polyvinylidene fluoride (PVDF), and a conductive agent acetylene black were mixed at a weight ratio of 98.2:1.1:0.7, and were added with N-methylpyrrolidone (NMP). The mixture was stirred under action of a vacuum mixer until a mixed system became a positive electrode slurry with uniform fluidity. The positive electrode slurry was evenly applied on aluminum foil having a thickness of 12 μm. The coated aluminum foil was baked in a five-stage oven with different temperatures and then dried in an oven at 120°C for 8 hours, followed by rolling and cutting, to obtain different required positive electrode plates.

(2) Preparation of negative electrode plates

A negative electrode active material artificial graphite (having a specific surface area shown in Table 1) with a mass proportion of 96.5%, a conductive agent single-walled carbon nanotube (SWCNT) with a mass proportion of 0.2%, a conductive agent conductive carbon black (SP) with a mass proportion of 1%, a binder sodium carboxymethyl cellulose (CMC) with a mass proportion of 1%, and a binder styrene-butadiene rubber (SBR) with a mass proportion of 1.3% were made into a slurry by using a wet process. The slurry was applied on a surface of a negative electrode current collector with copper foil, and then drying (temperature: 85°C, time: 5 hours), rolling, and die cutting were carried out to obtain different required negative electrode plates.

(3) Preparation of an electrolyte solution

In an argon-filled glove box (moisture < 10 ppm, oxygen < 1 ppm), ethylene carbonate (EC), propylene carbonate (PC), propyl propionate (PP), and ethyl propionate (EP) were evenly mixed at a mass ratio of 2:1:5:2; and lithium hexafluorophosphate, an aluminum salt compound (namely, the compound represented by formula 1 and/or the compound represented by formula 2), and 1-ethyl-3-methylimidazolium heptachlorodialuminate (specific amounts and selection thereof are shown in Table 1) were slowly added into the mixed solution. The mixture was stirred evenly to obtain the electrolyte solution.

(4) Preparation of a separator

A polyethylene separator with a thickness ranging from 7 μm to 9 μm was used.

(5) Preparation of a lithium-ion battery

The foregoing prepared positive electrode plate, separator, and negative electrode plate were wound to obtain an unfilled bare cell. The bare cell was placed in an outer packaging foil, the prepared electrolyte solution was injected into the dried bare cell, and after processes such as vacuum packaging, standing, forming, shaping, and sorting, the lithium-ion battery required was obtained.

Table 1 Lithium-ion batteries prepared in Comparative Examples 1 to 3 and Examples 1 to 11

| Item | Specific surface area A (unit: $m^2/g$) of the positive electrode active material | Specific surface area B (unit: $m^2/g$) of the negative electrode active material | Aluminum salt compound | | Ratio of (A+B) to C | Lithium hexafluorophosphate (wt%) | 1-ethyl-3-methylimidazolium heptachlorodialuminate (wt%) |
|---|---|---|---|---|---|---|---|
| | | | Type | Content (wt%) | | | |
| Comparative Example 1 | 0.2 | 1.1 | \ | \ | \ | 15.0 | \ |
| Comparative Example 2 | 0.2 | 3 | T2 | 0.2 | 1600 | 14.0 | \ |
| Comparative Example 3 | 0.8 | 0.7 | T1 | 0.1 | 1500 | 15.0 | 0.1 |
| Example 1 | 1.1 | 1.1 | T2 | 15 | 14.67 | \ | \ |
| Example 2 | 0.2 | 5.5 | T2 | 15 | 38.00 | \ | \ |
| Example 3 | 0.8 | 2.5 | T2 | 22 | 15.00 | \ | \ |
| Example 4 | 0.2 | 1.1 | T2 | 12.5 | 10.40 | \ | \ |
| Example 5 | 0.05 | 0.5 | T1 | 2 | 27.50 | 12.5 | \ |
| Example 6 | 0.3 | 0.9 | T4 | 4 | 30.00 | 9.0 | \ |
| Example 7 | 0.4 | 2 | T3 | 16 | 15.00 | \ | \ |
| Example 8 | 0.2 | 1.1 | T2 | 12.5 | 10.40 | 2.0 | 0.2 |
| Example 9 | 1 | 5 | T4 | 5 | 120 | 10.0 | 0.5 |
| Example 10 | 0.2 | 0.8 | T3 | 0.1 | 1000 | 13.0 | 2.0 |
| Example 11 | 0.2 | 1.1 | T2 | 12.5 | 10.40 | 2.0 | \ |

The batteries obtained in the above comparative examples and examples were tested for electrochemical performance. The related descriptions are as follows:

(1) 45°C cycling test: The batteries obtained in the above examples and comparative examples were placed in an environment of (45±2)°C to stand for 2 to 3 hours. When the battery bodies reached (45±2)°C, the batteries were charged at a constant current of 1C, with a cut-off current of 0.05C. After the batteries were fully charged, the batteries were left aside for 5 minutes, and then discharged at a constant current of 0.7C to a cut-off voltage of 3.0 V. A highest discharge capacity for the first three cycles was recorded as an initial capacity Q. When the number of cycles reaches 500, the last discharge capacity of the battery was recorded as $Q_1$. Recorded results are shown in Table 2.

The calculation formula used is as follows:

$$\text{Capacity retention rate (\%)} = Q_1/Q \times 100\%.$$

(2) 85°C high temperature storage test for 8 hours: The batteries obtained in the above examples and comparative examples were charged and discharged three times at a charge and discharge rate of 0.5C at room temperature, and then charged to a fully charged state at a rate of 0.5C. A highest discharge capacity $Q_2$ of the first three cycles at 0.5C was recorded. The batteries in a fully charged state were stored at 85°C for 8 hours. After 4 hours, a 0.5C discharge capacity $Q_3$ for each battery was recorded. Then, experimental data such as a capacity retention rate and whether gas is generated that are stored at a high temperature of each battery were obtained by means of calculation. Recorded results are shown in Table 2.
The calculation formula used is as follows:

$$\text{Capacity retention rate (\%)} = Q_3/Q_2 \times 100\%.$$

(3) Overcharge test: The batteries obtained in the above examples and comparative examples were charged at a rate of 3C and a constant current to 5 V at an ambient temperature of (25±3)°C. A battery state was recorded. A test result is represented by "number of passed/number of tested". For example, "2/5" indicates that two of five tests are passed. Recorded results are shown in Table 2.

(4) Low temperature discharge test: The batteries obtained in the above examples and comparative examples were first discharged at 0.2C to 3.0 V at an ambient temperature of (25±3)°C, and left aside for 5 minutes. The batteries were charged at 0.7C, and when a voltage at the cell terminals reached a charging limit voltage, the batteries began to be charged at a constant voltage. The charging was not stopped until a charging current is less than or equal to a cut-off current. The batteries were left aside for 5 minutes and then discharged at 0.2C to 3.0 V, and a discharge capacity in this case was recorded as a normal-temperature capacity $Q_4$. Then, the cells were charged at 0.7C, and when a voltage at the cell terminals reached the charging limit voltage, the batteries began to be charged at a constant voltage. The charging was not stopped until a charging current is less than or equal to a cut-off current. The fully charged batteries were left aside at (-10±2)°C for 4 hours, and then discharged at a current of 0.4C to a cut-off voltage of 3.0 V. A discharge capacity $Q_5$ was recorded to calculate a low-temperature discharge capacity retention rate. Recorded results are shown in Table 2.

The calculation formula used is as follows:

Low-temperature discharge capacity rentention rate (% = $Q_5/Q_4 \times 100\%$.

Table 2 Experimental test results of batteries obtained in Comparative Examples 1 to 5 and Examples 1 to 8

| Group | Capacity retention rate after 500 cycles at 45°C and 1C | 85°C high temperature storage for 8 hours | | Overcharge test at 3C and 5 V | | Capacity retention rate of 0.4C discharge at -10°C |
|---|---|---|---|---|---|---|
| | | Capacity retention rate | Battery state | Ignition (number of passed/ number of tested) | Explosion (number of passed/ number of tested) | |
| Comparative Example 1 | 57.4% | 42.5% | Gassing | 0/5 | 0/5 | 26.4% |
| Comparative Example 2 | 52.8% | 48.3% | Gassing | 0/5 | 0/5 | 33.8% |
| Comparative Example 3 | 55.0% | 53.9% | Gassing | 2/5 | 1/5 | 35.0% |

(continued)

| Group | Capacity retention rate after 500 cycles at 45°C and 1C | 85°C high temperature storage for 8 hours | | Overcharge test at 3C and 5 V | | Capacity retention rate of 0.4C discharge at -10°C |
|---|---|---|---|---|---|---|
| | | Capacity retention rate | Battery state | Ignition (number of passed/ number of tested) | Explosion (number of passed/ number of tested) | |
| Example 1 | 66.1% | 60.7% | No gassing | 3/5 | 4/5 | 43.1% |
| Example 2 | 65.0% | 63.9% | No gassing | 4/5 | 4/5 | 45.0% |
| Example 3 | 68.8% | 66.4% | No gassing | 5/5 | 3/5 | 47.8% |
| Example 4 | 73.1% | 71.2% | No gassing | 5/5 | 5/5 | 53.1% |
| Example 5 | 75.3% | 73.4% | No gassing | 5/5 | 5/5 | 55.3% |
| Example 6 | 74.4% | 70.9% | No gassing | 5/5 | 5/5 | 52.4% |
| Example 7 | 82.1% | 79.0% | No gassing | 5/5 | 5/5 | 59.1% |
| Example 8 | 78.0% | 75.4% | No gassing | 5/5 | 5/5 | 58.0% |
| Example 9 | 81.0% | 78.5% | No gassing | 5/5 | 5/5 | 570% |
| Example 10 | 700% | 68.1% | No gassing | 5/5 | 5/5 | 50.0% |
| Example 11 | 72.1% | 73.2% | No gassing | 5/5 | 5/5 | 54.2% |

The following can be learned from the results in Table 2. It can be learned from the comparative examples and examples that the long cycle life, high-temperature storage performance, low-temperature discharge performance, and safety performance of the lithium-ion battery can be effectively improved due to the synergistic effect of the positive and negative electrode active materials and the aluminum salt compound in the electrolyte solution, and that after the additive 1-ethyl-3-methylimidazolium heptachlorodialuminate was added into the electrolyte solution, the long cycle life, high-temperature storage performance, low-temperature discharge performance, and safety performance of the battery may be further improved.

The implementations of the present invention are described above. However, the present invention is not limited to the foregoing implementations. Any modifications, equivalent replacements, improvements, and the like within the spirit and principle of the present invention shall fall within the scope of protection of the present invention.

## Claims

1. A battery, **characterized in that** the battery comprises a positive electrode plate, a negative electrode plate, a separator, and an electrolyte solution; the positive electrode plate comprises a positive electrode active material; the negative electrode plate comprises a negative electrode active material; the electrolyte solution comprises an organic solvent, an additive and an electrolyte salt; and the electrolyte salt comprises at least one compound represented by Formula 1 and/or at least one compound represented by Formula 2:

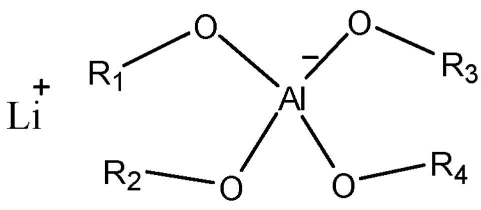

Formula 1,

and

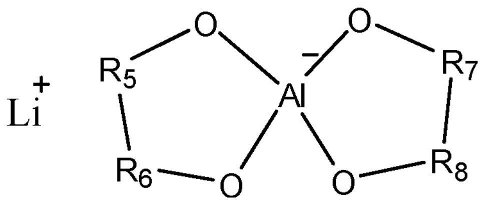

Formula 2,

wherein in Formula 1, $R_1$, $R_2$, $R_3$, and $R_4$ are the same as or different from each other, and are each independently selected from substituted or unsubstituted alkyl; and the substituent is halogen, or halogen-substituted or unsubstituted alkyl;

in Formula 2, $R_5$, $R_6$, $R_7$, and $R_8$ are the same as or different from each other, and are each independently selected from -C(=O)-, or substituted or unsubstituted alkylene; and the substituent is halogen, or halogen-substituted or unsubstituted alkyl; and

the battery satisfies the following requirement: a ratio of (A + B) to C ranges from 10 to 1000,

wherein A denotes a specific surface area (unit: $m^2/g$) of the positive electrode active material; B denotes a specific surface area (unit: $m^2/g$) of the negative electrode active material; and C denotes a percentage of a mass of the compound represented by Formula 1 and/or the compound represented by Formula 2 in a total mass of the electrolyte solution.

2. The battery according to claim 1, **characterized in that** the specific surface area A of the positive electrode active material ranges from 0.05 $m^2/g$ to 1 $m^2/g$, and preferably 0.1 $m^2/g$ to 0.4 $m^2/g$.

3. The battery according to claim 1 or 2, **characterized in that** the specific surface area B of the negative electrode active material ranges from 0.5 $m^2/g$ to 5 $m^2/g$, and preferably 0.9 $m^2/g$ to 2 $m^2/g$.

4. The battery according to any one of claims 1 to 3, **characterized in that** in Formula 1, $R_1$, $R_2$, $R_3$, and $R_4$ are the same as or different from each other, and are each independently selected from substituted or unsubstituted $C_{1-6}$ alkyl; and the substituent is halogen, or halogen-substituted or unsubstituted $C_{1-6}$ alkyl;

preferably, in Formula 1, $R_1$, $R_2$, $R_3$, and $R_4$ are the same as or different from each other, and are each independently selected from substituted or unsubstituted $C_{1-3}$ alkyl; and the substituent is halogen, or halogen-substituted or unsubstituted $C_{1-3}$ alkyl; and

preferably, in Formula 1, $R_1$, $R_2$, $R_3$, and $R_4$ are the same as or different from each other, and are each independently selected from substituted methyl, substituted ethyl, or substituted propyl; and the substituent is fluorine, fluorine-substituted or unsubstituted methyl, or fluorine-substituted or unsubstituted ethyl.

5. The battery according to any one of claims 1 to 4, **characterized in that** in Formula 2, $R_5$, $R_6$, $R_7$, and $R_8$ are the same as or different from each other, and are each independently selected from -C(=O)-, or substituted or unsubstituted $C_{1-6}$ alkylene; and the substituent is halogen, or halogen-substituted or unsubstituted $C_{1-6}$ alkyl;

preferably, in Formula 2, $R_5$, $R_6$, $R_7$, and $R_8$ are the same as or different from each other, and are each independently selected from -C(=O)-, or substituted or unsubstituted $C_{1-3}$ alkylene; and the substituent is halogen, or halogen-substituted or unsubstituted $C_{1-3}$ alkyl; and

preferably, in Formula 2, $R_5$, $R_6$, $R_7$, and $R_8$ are the same as or different from each other, and are each independently selected from -C(=O)-, substituted or unsubstituted methylene, or substituted or unsubstituted ethylidene; and the substituent is fluorine, fluorine-substituted or unsubstituted methyl, or fluorine-substituted or unsubstituted ethyl.

6. The battery according to any one of claims 1 to 5, **characterized in that** the compound represented by Formula 1 is selected from a compound represented by the following Formula T1:

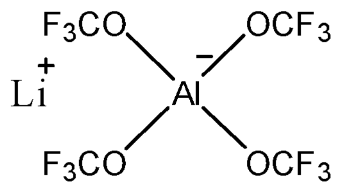

(T1).

7. The battery according to any one of claims 1 to 6, wherein the compound represented by Formula 2 is selected from at least one of compounds represented by the following formulas T2 to T4:

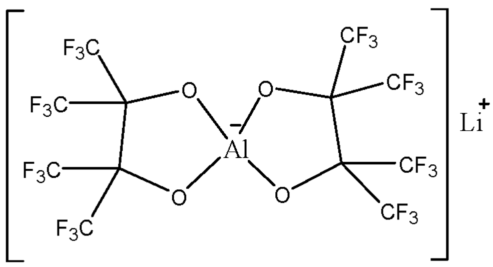

(T2);

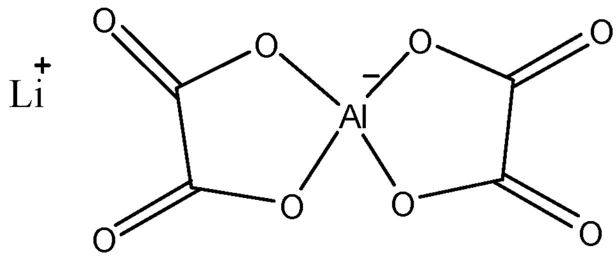

(T3);

and

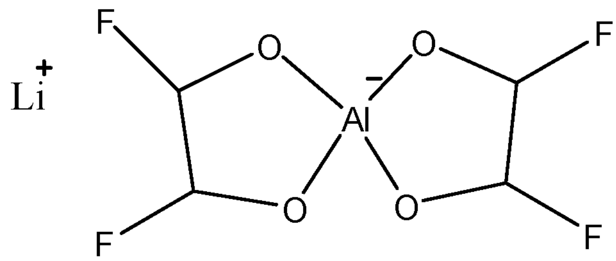

(T4).

8. The battery according to any one of claims 1 to 7, **characterized in that** a mass of the compound represented by Formula 1 and/or the compound represented by Formula 2 accounts for 0.1 wt% to 16 wt% of the total mass of the electrolyte solution, and preferably 0.2 wt% to 12 wt%.

9. The battery according to any one of claims 1 to 8, **characterized in that** the electrolyte salt further comprises a lithium salt; and the lithium salt is selected from at least one of lithium bis(trifluoromethanesulphonyl)imide, lithium bis(fluorosulfonyl)imide, or lithium hexafluorophosphate; and/or
a mass of the electrolyte salt accounts for 10 wt% to 20 wt% of the total mass of the electrolyte solution.

10. The battery according to any one of claims 1 to 9, **characterized in that** the electrolyte solution further comprises 1-ethyl-3-methylimidazolium heptachlorodialuminate; and/or
a percentage of a mass of 1-ethyl-3-methylimidazolium heptachlorodialuminate in the total mass of the electrolyte

solution ranges from 0.1 wt% to 2 wt%.

**11.** The battery according to any one of claims 1 to 10, **characterized in that** the electrolyte solution further comprises one or more of a nitrile compound, a sulfur-containing compound, or a carbonate compound;

preferably, the nitrile compound is selected from one or more of succinonitrile, glutaronitrile, adiponitrile, pimelonitrile, suberonitrile, glycerol trinitrile, ethoxy(pentafluoro)phosphazene, or 1,3,6-hexanetrionitrile;
preferably, the sulfur-containing compound is selected from one or more of 1,3-propane sultone, 1-propene 1,3-sultone, ethylene sulfate, or vinylene sulfate; and
preferably, the carbonate compound is one or both of ethylene carbonate or vinylethylene carbonate.

**12.** The battery according to any one of claims 1 to 11, **characterized in that** a percentage of a mass of the additive in the total mass of the electrolyte solution ranges from 6 wt% to 20 wt%.

**13.** The battery according to any one of claims 1 to 12, **characterized in that** the organic solvent is selected from at least one of carbonate, carboxylic acid ester, or fluorinated ether; and the carbonate is selected from one or more combinations of ethylene carbonate, propylene carbonate, fluoroethylene carbonate, dimethyl carbonate, ethyl methyl carbonate, diethyl carbonate, or methyl propyl carbonate; and/or

the carboxylic acid ester is selected from one or more combinations of ethyl propionate or propyl propionate; and/or
the fluorinated ether is selected from 1,1,2,3-tetrafluoroethyl-2,2,3,3-tetrafluoropropyl ether.

**14.** The battery according to any one of claims 1 to 13, **characterized in that** the positive electrode plate comprises a positive electrode current collector and a positive electrode active material layer coated on a surface of either or both sides of the positive electrode current collector; and the positive electrode active material layer comprises the positive electrode active material, a conductive agent, and a binder; and
preferably, the positive electrode active material is selected from lithium cobaltate oxide or lithium cobaltate oxide doped and coated with two or more elements in Al, Mg, Mn, Cr, Ti, or Zr; and a chemical formula of the lithium cobaltate oxide doped and coated with two or more elements in Al, Mg, Mn, Cr, Ti, or Zr is $Li_xCo_{1-y1-y2-y3-y4}A_{y1}B_{y2}C_{y3}D_{y4}O_2$, wherein $0.95 \le x \le 1.05$, $0.01 \le y1 \le 0.1$, $0.01 \le y2 \le 0.1$, $0 \le y3 \le 0.1$, $0 \le y4 \le 0.1$, and A, B, C, and D are selected from two or more elements in Al, Mg, Mn, Cr, Ti, or Zr.

**15.** The battery according to any one of claims 1 to 14, **characterized in that** the negative electrode plate comprises a negative electrode current collector and a negative electrode active material layer coated on a surface of either or both sides of the negative electrode current collector; and
preferably, the negative electrode active material layer comprises the negative electrode active material, a conductive agent, and a binder; and the negative electrode active material is selected from one or more of artificial graphite, natural graphite, hard carbon, mesocarbon microbead, lithium titanate, silicon carbon, or silicon monoxide.

## INTERNATIONAL SEARCH REPORT

International application No.
**PCT/CN2023/091652**

**A. CLASSIFICATION OF SUBJECT MATTER**

H01M6/16(2006.01)i； H01M10/0567(2010.01)i； H01M10/0568(2010.01)i

According to International Patent Classification (IPC) or to both national classification and IPC

**B. FIELDS SEARCHED**

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; DWPI; CNKI: 锂离子电池, 电解液, 铝酸, 锂, 正极, 负极, 比表面积, m2/g, 甲基咪唑, 铝酸酯锂, Lithium-ion, battery, electrolyte, aluminate, lithium, positive electrode, negative, specific, surface, area, methylimidazole, "lithium aluminate"

**C. DOCUMENTS CONSIDERED TO BE RELEVANT**

| Category* | Citation of document, with indication, where appropriate, of the relevant passages | Relevant to claim No. |
|---|---|---|
| Y | JP 2006107793 A (SONY CORP.) 20 April 2006 (2006-04-20)<br>description, paragraphs 6-70, and figures 1-5 | 1-15 |
| Y | CN 111628218 A (ZHUHAI COSMX BATTERY CO., LTD.) 04 September 2020 (2020-09-04)<br>description, paragraphs 3-74 | 1-15 |
| Y | CN 101771166 A (BEIJING INSTITUTE OF TECHNOLOGY) 07 July 2010 (2010-07-07)<br>description, paragraphs 8-19 | 1-15 |
| Y | US 10763547 B1 (HIGH TECH BATTERY INC.) 01 September 2020 (2020-09-01)<br>description, columns 1-2 | 10 |
| Y | CN 105355977 A (BSST (TIANJIN) POWER BATTERY TECHNOLOGY DEVELOPMENT CO., LTD.) 24 February 2016 (2016-02-24)<br>description, paragraphs 3-106 | 1-15 |
| Y | CN 113196541 A (INNOLITH SCIENCE AND TECHNOLOGY GMBH) 30 July 2021 (2021-07-30)<br>description, paragraphs 26-130 | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 June 2023** | **23 June 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/091652**

**C. DOCUMENTS CONSIDERED TO BE RELEVANT**

| Category* | Citation of document, with indication, where appropriate, of the relevant passages | Relevant to claim No. |
|---|---|---|
| Y | CN 1430796 A (MITSUBISHI CABLE INDUSTRIES. LTD.) 16 July 2003 (2003-07-16) description, page 5, paragraph 1 to page 19, paragraph 1 | 1-15 |

Form PCT/ISA/210 (second sheet) (July 2022)

**INTERNATIONAL SEARCH REPORT**
**Information on patent family members**

International application No.
**PCT/CN2023/091652**

| Patent document cited in search report | Publication date (day/month/year) | Patent family member(s) | Publication date (day/month/year) |
|---|---|---|---|
| JP 2006107793 A | 20 April 2006 | None | |
| CN 111628218 A | 04 September 2020 | None | |
| CN 101771166 A | 07 July 2010 | None | |
| US 10763547 B1 | 01 September 2020 | TW 202114283 A | 01 April 2021 |
| | | TWI 742818 B | 11 October 2021 |
| | | DK 3799184 T3 | 24 January 2022 |
| | | EP 3799184 A1 | 31 March 2021 |
| | | EP 3799184 B1 | 22 December 2021 |
| | | ES 2905132 T3 | 07 April 2022 |
| | | PT 3799184 T | 31 January 2022 |
| CN 105355977 A | 24 February 2016 | None | |
| CN 113196541 A | 30 July 2021 | HUE 057151 T2 | 28 April 2022 |
| | | ES 2902968 T3 | 30 March 2022 |
| | | IL 288108 A | 01 January 2022 |
| | | WO 2021019041 A1 | 04 February 2021 |
| | | HUE 055324 T2 | 29 November 2021 |
| | | US 2022077494 A1 | 10 March 2022 |
| | | CA 3141137 A1 | 04 February 2021 |
| | | HUE 058100 T2 | 28 July 2022 |
| | | PL 3794665 T3 | 14 February 2022 |
| | | IL 288762 A | 01 February 2022 |
| | | BR 112021023657 A2 | 08 February 2022 |
| | | EP 3791437 A1 | 17 March 2021 |
| | | EP 3791437 B1 | 13 October 2021 |
| | | JP 2022538377 A | 02 September 2022 |
| | | JP 7232357 B2 | 02 March 2023 |
| | | JP 2022538203 A | 01 September 2022 |
| | | JP 7232355 B2 | 02 March 2023 |
| | | CA 3139843 A1 | 04 February 2021 |
| | | JP 2022538513 A | 05 September 2022 |
| | | JP 7232353 B2 | 02 March 2023 |
| | | WO 2021019047 A1 | 04 February 2021 |
| | | BR 112021022989 A2 | 08 February 2022 |
| | | PL 3794664 T3 | 14 February 2022 |
| | | KR 20220007870 A | 19 January 2022 |
| | | KR 102470117 B1 | 24 November 2022 |
| | | KR 20220007869 A | 19 January 2022 |
| | | KR 102470114 B1 | 24 November 2022 |
| | | IL 288765 A | 01 February 2022 |
| | | PL 3794663 T3 | 19 April 2022 |
| | | AU 2020319847 A1 | 23 December 2021 |
| | | AU 2020319847 B2 | 01 December 2022 |
| | | EP 3794666 A1 | 24 March 2021 |
| | | EP 3794666 B1 | 29 December 2021 |
| | | EP 3794666 B9 | 11 May 2022 |
| | | CA 3139803 A1 | 04 February 2021 |
| | | AU 2020319679 A1 | 23 December 2021 |
| | | AU 2020319679 B2 | 24 November 2022 |
| | | WO 2021019045 A1 | 04 February 2021 |

Form PCT/ISA/210 (patent family annex) (July 2022)

**INTERNATIONAL SEARCH REPORT**
**Information on patent family members**

International application No.
**PCT/CN2023/091652**

| Patent document cited in search report | Publication date (day/month/year) | Patent family member(s) | Publication date (day/month/year) |
|---|---|---|---|
| | | CA 3139807 A1 | 04 February 2021 |
| | | ES 2902452 T3 | 28 March 2022 |
| | | IL 288109 A | 01 January 2022 |
| | | HUE 058122 T2 | 28 July 2022 |
| | | ES 2902219 T3 | 25 March 2022 |
| | | HUE 057612 T2 | 28 May 2022 |
| | | US 2022085409 A1 | 17 March 2022 |
| | | BR 112021022999 A2 | 12 April 2022 |
| | | ES 2908086 T3 | 27 April 2022 |
| | | WO 2021019044 A1 | 04 February 2021 |
| | | BR 112021023001 A2 | 08 February 2022 |
| | | AU 2020321601 A1 | 23 December 2021 |
| | | AU 2020321601 B2 | 24 November 2022 |
| | | HUE 057443 T2 | 28 May 2022 |
| | | AU 2020322166 A1 | 23 December 2021 |
| | | AU 2020322166 B2 | 24 November 2022 |
| | | BR 112021023003 A2 | 08 February 2022 |
| | | KR 20220007083 A | 18 January 2022 |
| | | KR 102470115 B1 | 23 November 2022 |
| | | EP 3794663 A1 | 24 March 2021 |
| | | EP 3794663 B1 | 05 January 2022 |
| | | EP 3794663 B9 | 20 April 2022 |
| | | KR 20220007868 A | 19 January 2022 |
| | | KR 102470110 B1 | 24 November 2022 |
| | | DK 3772129 T3 | 26 July 2021 |
| | | DK 3794666 T3 | 28 February 2022 |
| | | PL 3772129 T3 | 27 September 2021 |
| | | PL 3794666 T3 | 19 April 2022 |
| | | IL 288766 A | 01 February 2022 |
| | | JP 2022538962 A | 07 September 2022 |
| | | JP 7232356 B2 | 02 March 2023 |
| | | KR 20220011137 A | 27 January 2022 |
| | | KR 102470149 B1 | 23 November 2022 |
| | | EP 3794664 A1 | 24 March 2021 |
| | | EP 3794664 B1 | 06 October 2021 |
| | | CA 3139798 A1 | 04 February 2021 |
| | | CA 3139800 A1 | 04 February 2021 |
| | | JP 2022538376 A | 02 September 2022 |
| | | JP 7232354 B2 | 02 March 2023 |
| | | IL 288186 A | 01 January 2022 |
| | | PL 3791437 T3 | 21 February 2022 |
| | | EP 3794665 A1 | 24 March 2021 |
| | | EP 3794665 B1 | 06 October 2021 |
| | | AU 2020323712 A1 | 23 December 2021 |
| | | AU 2020323712 B2 | 24 November 2022 |
| | | EP 3772129 A1 | 03 February 2021 |
| | | EP 3772129 A8 | 24 March 2021 |
| | | EP 3772129 B1 | 30 June 2021 |
| | | KR 20220008288 A | 20 January 2022 |
| | | KR 102470119 B1 | 25 November 2022 |

Form PCT/ISA/210 (patent family annex) (July 2022)

**INTERNATIONAL SEARCH REPORT**
**Information on patent family members**

International application No.
**PCT/CN2023/091652**

| Patent document cited in search report | Publication date (day/month/year) | Patent family member(s) | Publication date (day/month/year) |
|---|---|---|---|
| | | ES 2906730 T3 | 20 April 2022 |
| | | AU 2020320033 A1 | 16 December 2021 |
| | | WO 2021019043 A1 | 04 February 2021 |
| | | ES 2884936 T3 | 13 December 2021 |
| | | US 2022077511 A1 | 10 March 2022 |
| | | US 2022077461 A1 | 10 March 2022 |
| | | JP 2022539947 A | 14 September 2022 |
| | | JP 7232359 B2 | 02 March 2023 |
| | | WO 2021019042 A1 | 04 February 2021 |
| | | US 2022085408 A1 | 17 March 2022 |
| | | US 2021036358 A1 | 04 February 2021 |
| | | BR 112021022996 A2 | 12 April 2022 |
| CN 1430796 A | 16 July 2003 | TW 531922 B | 11 May 2003 |
| | | AU 5879001 A | 03 December 2001 |
| | | WO 0191211 A1 | 29 November 2001 |
| | | US 2003165739 A1 | 04 September 2003 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 87587-77-7